# EUROPEAN PATENT APPLICATION

(11) **EP 1 905 529 A1**
(43) Date of publication of application: **02.04.2008**
(21) Application number: 06768063.7
(22) Date of filing: 11.07.2006
(51) Int. Cl.: B23K 26/08, B23K 26/06, B23P 17/00, B26F 3/00

(54) **HYBRID LASER PROCESSING DEVICE**

(30) Priority: 21.07.2005 JP 2005210816
(71) Applicant: Shibuya Kogyo Co., Ltd., Kanazawa-shi, Ishikawa 920-8681 (JP)
(72) Inventor: KOSEKI, Ryoji, c/o Shibuya Kogyo Co., Ltd., Kanazawa-shi, Ishikawa 920-8681 (JP); SASAKI, Motoi, c/o Shibuya Kogyo Co., Ltd., Kanazawa-Shi, Ishikawa 920-8681 (JP); KAWAHARA, Yoshihiro, c/o Shibuya Kogyo Co., Ltd., Kanazawa-shi, Ishikawa 920-8681 (JP)
(74) Representative: Naylor, Matthew John
(86) International application number: PCT/JP2006/313750
(87) International publication number: WO 2007/010783

(57) **Abstract**

Laser beam L oscillated by a laser oscillator 4 is guided by an optical fiber 12 constituting laser-guiding means 7 to a processing head 6, a liquid passageway 25 to which a high-pressure liquid is supplied by a high-pressure pump 5 is formed in the processing head, and this high-pressure liquid is jetted in the form of a liquid column W from a jet hole 24 of a jet nozzle 23 provided at a lower end of the processing head 6.

The optical fiber is exposed inside of the liquid passageway, and a tip of a fiber core 12a of the optical fiber projects beyond a fiber clad 12b, and is close to the vicinity of the jet hole.

The laser beam irradiated from the fiber core is guided to the liquid column after it is reflected on a first inclined surface 24a formed on the jet hole, and processing on the workpiece 2 is performed.

The laser beam can easily be guided to the liquid column.

## Description

### Technical Field

The present invention relates to a hybrid laser processing apparatus, and more specifically relates to a hybrid laser processing apparatus that jets a liquid from a jet hole to the outside in the form of a liquid column and guides laser beam to the liquid column.

### Background Art

Conventionally, a hybrid laser processing apparatus including a processing head having a jet hole, liquid supply means for supplying the processing head with a high-pressure liquid, a laser oscillator that oscillates laser beam, and laser-guiding means for guiding the laser beam oscillated by the laser oscillator to the processing head via an optical fiber, the apparatus performing processing on a workpiece by jetting the liquid supplied from the liquid supply means from the jet hole to the outside in the form of a liquid column and guiding the laser beam to the liquid column using the laser-guiding means has been known.
As such a hybrid laser processing apparatus, one that guides a laser beam oscillated by a laser 1 to a nozzle block 43 using a beam guide 6, and also guides the laser beam to a liquid beam jetted from an nozzle intake opening 30 as a result of a liquid being supplied to the nozzle block 43 using a pump 17 has been known (Patent Document 1).
In this patent document 1, a laser beam irradiated from the beam guide 6 reaches the nozzle block via a collimator 21 and a focusing lens 25, and the laser beam condensed by the focusing lens passes through a window 36 and the liquid, and then converges within a planar surface of the nozzle intake opening 30, and is guided to the liquid beam.
Patent Document 1 : National Publication of International Patent Application No. 10-500903

### Disclosure of the invention

### Issues to be solved by the invention

However, when the laser beam is condensed on the nozzle intake opening 30 by the focusing lens 25 as disclosed in Patent Document 1 above, there is a problem in that adjustment of the focal point position of the laser beam is difficult if the jetted liquid beam has a small diameter.
In view of such problem, the present invention is intended to provide a hybrid laser processing apparatus that easily guides light to a jetted liquid column.

### Means to be solve the issues

In other words, a hybrid laser processing apparatus according to claim 1 including a processing head having a jet hole, liquid supply means for supplying the processing head with a high-pressure liquid, a laser oscillator that oscillates laser beam, and laser-guiding means for guiding the laser beam oscillated by the laser oscillator to the processing head via an optical fiber, the apparatus performing processing on a workpiece by jetting the liquid supplied from the liquid supply means from the jet hole to the outside in the form of a liquid column and guiding the laser beam to the liquid column using the laser-guiding means, characterized in that an end of the optical fiber is disposed within a passageway for the high-pressure liquid in the processing head, and the jet hole is positioned on an optical axis of the laser beam emitted from the optical fiber.

### Effect of the invention

According to the above invention, as a result of an end of the optical fiber being disposed within the passageway for the high-pressure liquid in the processing head, the end of the optical fiber can be made close to the jet hole, making it easy to adjust the position irradiated with laser beam, so that laser beam can easily be guided to the liquid column.

### Best Mode for Carrying Out the Invention

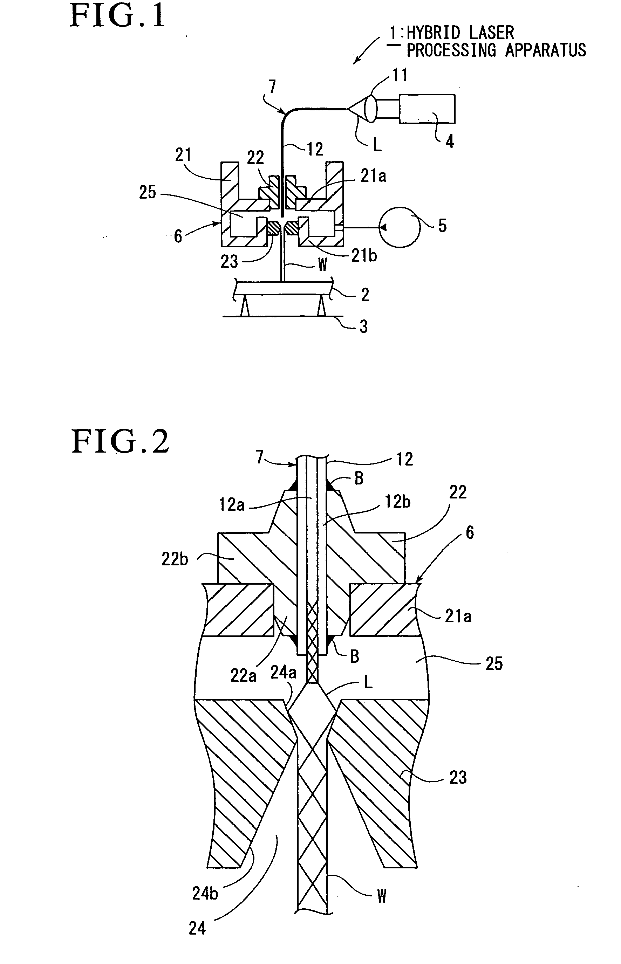

Hereinafter, describing an embodiment shown in the drawings, Figure 1 shows a hybrid laser processing apparatus 1 according to the present invention, the apparatus cutting a workpiece 2 into a required shape by guiding laser beam L to a liquid column W formed by liquid jetting.
This hybrid laser processing apparatus 1 includes a processing table 3 supporting the workpiece 2, a laser oscillator 4 oscillating laser beam L, a high-pressure pump 5 as liquid supply means for pressurizing a liquid, such as pure water, to a high pressure and supplying it, and a processing head 6 jetting the liquid toward the workpiece 2 in the form of a liquid column W and guiding the laser beam L to the liquid column W, in which laser-guiding means 7 guiding the laser beam L is provided between the laser oscillator 4 and the processing head 6.
The workpiece 2 of this embodiment may be a thin semiconductor wafer, an epoxy resin board or a composite material consisting of resin and metal, etc., and the hybrid laser processing apparatus 1 can perform the processing for providing a groove on a surface of the workpiece 2, in addition to processing for cutting or drilling the workpiece 2.
The processing table 3 holds the workpiece 2 from underneath, and the processing head 6 is moved in horizontal and vertical directions relative to the workpiece 2 by transferring means not shown. Also, the workpiece 2 may be moved by the processing table 3.

Next, the laser oscillator 4 in this embodiment is a YAG laser oscillator, and it can perform CW oscillation or pulse oscillation depending on the processing, and its processing conditions, such as its output or pulse oscillation cycle, may arbitrarily be adjusted.
For the laser oscillator 4, a fiber laser, semiconductor laser, or CO₂ laser oscillator, etc., can be used instead of the YAG laser oscillator, and if the laser beam L oscillated has a wavelength that is easily absorbed by water, such as that oscillated by a CO₂ laser oscillator, a liquid that poorly absorbs the laser beam L may be used for the liquid jetted by the processing head 6.
The laser-guiding means 7 includes a condensing lens 11 that condenses the laser beam L oscillated by the laser oscillator 4, and an optical fiber 12 that guides the laser beam L condensed by the condensing lens 11 up to the processing head 6.
This optical fiber 12, as shown in Figure 2, has a configuration in which a central fiber core 12a is surrounded by a fiber clad 12b, and here, the diameter of the fiber core 12a can be 10 to 200 µm.
Also, the refractive index of the fiber core 12a is 1.7, and the refractive index of the fiber clad 12b is 1.4, and when the laser beam L enters the fiber core 12a at a proper angle by means of the condensing lens 11, the laser beam L is guided to the processing head 6 while repeating total reflection at the boundary between the fiber core 12a and the fiber clad 12b.

Describing the processing head 6 using Figures 1 and 2, the processing head 6 includes a housing 21 held by the transferring means, a fiber flange 22 securing the optical fiber 12, and a jet nozzle 23 having a jet hole 24 for jetting a liquid column W.
In the housing 21, a flange holding portion 21a holding the fiber flange 22, and a nozzle holding portion 21b holding the jet nozzle 23 are formed, and a liquid passageway 25 is formed between the flange holding portion 21a and the nozzle holding portion 21b, and the aforementioned high-pressure pump 5 is connected to this liquid passageway 25 to supply a high-pressure liquid.
The fiber flange 22 consists of a cylindrical portion 22a holding the above optical fiber 12, and a flange portion 22b surrounding the cylindrical portion 22a, and the cylindrical portion 22a is formed to have an external diameter conforming to the diameter of a through hole of the flange holding portion 21a.
Also, the flange portion 22b is adhered to an upper surface of the flange holding portion 21a, avoiding the liquid in the liquid passageway 25 from leaking from a gap between the through hole and the cylindrical portion 22a.
A through hole is formed upwardly and downwardly in the center of the fiber flange 22, and the optical fiber 12 passes through the through hole from the upper side to the lower side, the tip of the optical fiber 12 exposing in the liquid passageway 25. The fiber clad 12b projecting upwardly and downwardly beyond the cylindrical portion 22a, and the cylindrical portion 22a are mutually bonded by an adhesive B.
In this embodiment, the fiber core 12a of the optical fiber 12 projecting downwardly beyond the cylindrical portion 22a further projects downwardly beyond the fiber clad 12b, the fiber core 12a being exposed in the liquid passageway 25.
The laser beam L, which has been guided while being repeatedly reflected at the boundary between the fiber core 12a and the fiber clad 12b, is also repeatedly reflected at the boundary between the fiber core 12a and the liquid, and is emitted from an end of the fiber core 12a toward the jet nozzle 23.
In other words, comparing the reflective index of the fiber core 12a and that of the liquid, the reflective index of the fiber core 12a is higher (pure water: 1.33), so that the laser beam reflected at the boundary between the fiber core 12a and the fiber clad 12b is also totally reflected at the boundary between the fiber core 12a and the liquid.

The aforementioned jet nozzle 23 is a cylindrical member with the jet hole 24 provided at its center, and stainless steel or gold is used for the material thereof, and the jet nozzle 23 fits into a through hole formed on the nozzle holding portion 21b of the housing 21.
The jet hole 24 has a first inclined surface 24a, formed on the optical fiber 12 side, having a diameter narrowing toward the workpiece 2 side, and a second inclined surface 24b, formed closer to the workpiece 2 than the first inclined surface 24a, having a diameter widening toward the workpiece 2 side, and at least the first inclined surface 24a of these is mirror-finished to serve as a laser beam reflection surface.
The liquid from the liquid passageway 25 flows into this jet hole 24, and the liquid column W is jetted toward the workpiece 2 at the boundary between the first inclined surface 24a and the second inclined surface 24b, that is, with the diameter of the minimum diameter portion. Here, the diameter of the minimum diameter portion can be 30 to 120 µm.
At this time, what is called an air pocket is formed by the second inclined surface 24b around the jetted liquid column W, so that the liquid column W reaches the workpiece 2 without diffusion.
Since a terminal portion of the fiber core 12a of the optical fiber 12 is positioned in the vicinity of an upper end portion of the first inclined surface 24a, the position has been adjusted so that the laser beam L emitted from the fiber core 12a enters the liquid column W after it is reflected on the first inclined surface 24a.
The laser beam L emitted from the fiber core 12a, upon entering the liquid column W, is repeatedly reflected at the boundary between the liquid and the air and then reaches the workpiece 2, processing on that workpiece being performed.

As described above, the hybrid laser processing apparatus 1 according to this embodiment, the fiber core 12a is fixed by the fiber flange 22, and the tip thereof is exposed in the liquid passageway 25 to be close to the jet hole 24 of the jet nozzle 23, making it possible to easily guide the laser beam L to the liquid column W.
In other words, the position of the tip of the fiber core 12a may be determined so that the laser beam emitted by the fiber core 12a is reflected on the first inclined surface 24a, thereby making it possible to easily guide the laser beam to the liquid column.
Also, the optical fiber 12 may be fixed to the processing head 6 using the fiber flange 22, so that the configuration is easy, and as a result, the hybrid laser processing apparatus 1 can be downsized, making it possible to manufacture it at lower costs by that amount.
Furthermore, the configuration in which the processing head 6 is fixed to the processing head 6 using the fiber flange 22 makes the position irradiated with the laser beam L become difficult to shift once the position has been set, so that it is possible to perform processing on the workpiece 2 by moving the processing head 6.
The fiber core 12a projects closer to the jet hole 24 than the fiber clad 12b, avoiding the liquid in the liquid passageway 25 from being hindered by the fiber clad 12b from flowing into the jet hole 24.

Meanwhile, in Patent Document 1, it is necessary to condense a laser beam to the diameter of a liquid beam, requiring a high-precision light-condensing means, which results in the hybrid laser processing apparatus having a large size, and also being expensive.
Furthermore, since it is necessary to condense the laser beam at a high precision, if the processing head is moved during processing, the optical axis of the laser beam and the axial center of the jet hole will be misaligned, which may result in the laser beam not entering the liquid beam, so that it is necessary to move the workpiece using the processing table.

The first inclined surface in the embodiment described above may be a cylindrical surface in parallel to the direction of the optical fiber axis, and also it is possible to directly guide the laser beam into the liquid column without reflection on the first inclined surface.
Furthermore, in the above embodiment, although the fiber core 12a is exposed in the liquid by projecting it beyond the fiber clad 12b, it is also possible for the tip of the fiber clad 12b to have a narrower diameter as it is closer to the jet hole 24, instead of the fiber core 12a projecting beyond the fiber clad 12b.
In those cases, the laser beam L can be reflected at the boundary between the fiber core 12a and the fiber clad 12b until it reaches the end of the optical fiber 12, and the liquid will not be hindered by the fiber clad 12b from flowing into the jet hole 24.
The above embodiment describes a processing apparatus for cutting a semiconductor substrate, etc., but the present invention can be employed in laser therapy equipment.

### Brief Description of the Drawings

Figure 1 is a configuration diagram of a hybrid laser processing apparatus according to this embodiment; and
Figure 2 is an enlarged sectional view of a processing head.

### Description of Symbols

- 1: hybrid laser processing apparatus
- 2: workpiece
- 4: laser oscillator
- 5: high-pressure pump
- 6: processing head
- 7: laser-guiding means
- 12: optical fiber
- 12a: fiber core
- 12b: fiber clad
- 23: jet nozzle
- 24: jet hole
- 24a: first inclined surface
- 24b: second inclined surface
- 25: liquid passageway
- W: liquid column
- L: laser beam

## Claims

1. A hybrid laser processing apparatus including a processing head having a jet hole, liquid supply means for supplying the processing head with a high-pressure liquid, a laser oscillator that oscillates laser beam, and laser-guiding means for guiding the laser beam oscillated by the laser oscillator to the processing head via an optical fiber,
the apparatus performing processing on a workpiece by jetting the liquid supplied from the liquid supply means from the jet hole to the outside in the form of a liquid column and guiding the laser beam to the liquid column using the laser-guiding means, **characterized in that**
an end of the optical fiber is disposed within a passageway for the high-pressure liquid in the processing head, and the jet hole is positioned on an optical axis of the laser beam emitted from the optical fiber.

2. The hybrid laser processing apparatus according to claim 1, **characterized in that** the optical fiber has a configuration in which a fiber clad surrounds an external periphery of a fiber core, and the fiber core projects beyond the fiber clad, making an end of the fiber core be closer to the jet hole than an end of the fiber clad.

3. The hybrid laser processing apparatus according to claim 1 or 2, **characterized in that** a laser beam reflection surface is formed on an internal peripheral surface of the jet hole, and the laser beam emitted from an end surface of the optical fiber is guided to the liquid column after it is reflected on the laser beam reflection surface.

4. The hybrid laser processing apparatus according to claim 3, **characterized in that** the laser beam reflection surface is an inclined surface with a diameter narrowing toward the workpiece.

5. The hybrid laser processing apparatus according to claim 4, **characterized in that** a second inclined surface with a diameter widening toward the workpiece is formed closer to the workpiece than a minimum diameter portion of the inclined surface of the jet hole.
